# EUROPEAN PATENT SPECIFICATION

(11) **EP 4 498 491 B1**
(45) Date of publication and mention of the grant of the patent: **31.12.2025**
(21) Application number: 23217162.9
(22) Date of filing: 15.12.2023
(51) Int. Cl.: H01M 50/169, H01M 50/152

(54) **CYLINDRICAL BATTERY CELL, BATTERY ASSEMBLY AND ELECTRONIC DEVICE**
ZYLINDRISCHE BATTERIEZELLE, BATTERIEANORDNUNG UND ELEKTRONISCHE VORRICHTUNG
ÉLÉMENT DE BATTERIE CYLINDRIQUE, ENSEMBLE BATTERIE ET DISPOSITIF ÉLECTRONIQUE

(30) Priority: 25.07.2023 CN 202321961590 U
(43) Date of publication of application: 29.01.2025
(73) Proprietor: AESC Japan Ltd., Yokohama-Shi, Kanagawa 220-0012 (JP)
(72) Inventor: QIAN, Jia, Jiangyin City, Wuxi City 214443 (CN); CHE, Peipei, Jiangyin City, Wuxi City 214443 (CN)
(74) Representative: Becker, Eberhard

(56) References cited:
- EP-A1- 4 184 669
- WO-A1-2023/097584
- US-A1- 2022 367 968
- US-A1- 2023 155 262

## Description

### BACKGROUND

### Technical Field

The disclosure relates to the field of battery technology, specifically to a cylindrical battery cell, a battery assembly and an electronic device.

### Description of Related Art

With the development of lithium battery technology, the requirements for energy density of battery cells is increasing higher. Cylindrical batteries are able to achieve higher energy density due to high assembly ratio, so cylindrical batteries have become the mainstream of battery cell. Nowadays, sealing of the negative electrode terminal sealing of cylindrical battery cells is normally performed by overlapping and welding the negative electrode current collector and the housing along with crimp-sealing the end cap, which causes the entire manufacturing process to be complicated and the assembly efficiency is low.

In order to simplify the assembly process and improve the assembly efficiency of existing cylindrical battery cells, the process of crimp-sealing the end cap is normally replaced with the method of welding the end cap with the housing and the current collecting component. However, when the end cap and the current collecting component are welded through penetration laser, the welding mark formed in the welding region will be exposed on the outer surface of the end cap, making the end cap to be easily oxidized in the welding region and causing corrosion of the welding mark. Accordingly, the welding between the end cap and the current collecting component is failed, which affects the service life of the cylindrical battery cell.

WO 2023/097584 A1 discloses the preamble of claim 1 and relates to a battery cell, a battery, an electrical apparatus and a manufacturing method and apparatus for a battery cell, and the battery cell includes a housing, an electrode assembly, a current collecting component and a pressure relief mechanism. EP 4184669 A1 relates to a battery cell, a method and system for manufacturing same, a battery, and an electrical device, in which the battery cell includes: a housing, an electrode assembly accommodated in the housing, where the electrode assembly includes a first tab at an end oriented toward the opening; an end cap to fit and cover the opening to seal the electrode assembly in the housing; a current collecting member disposed between the end cap and the first tab, where the current collecting member is welded to the end cap and the first tab separately to implement electrical connection between the end cap and the first tab.

### SUMMARY

The invention is set out in the appended set of claims. The following disclosure serves a better understanding of the present invention. In view of the above shortcomings of the related art, the present disclosure provides a cylindrical battery cell, a battery assembly and an electronic device to solve the technical problem of high failure rate of welding between the end cap and the current collecting component and the influence of high failure rate on the service life of cylindrical battery cell.

In order to achieve the above purpose and other related purposes, the present disclosure provides a cylindrical battery cell, including: a housing, an electrode assembly, a current collecting component, an end cap and a cover plate. The housing includes an end wall and a side wall surrounding the end wall. An opening is formed on one side of the side wall facing away from the end wall. The electrode assembly is disposed in the housing, and a first tab is disposed on one side of the electrode assembly facing the opening. The current collecting component is disposed on one side of the electrode assembly facing the opening, and the current collecting component is welded with the first tab. The end cap is disposed on one side adjacent to the opening, and is welded with the side wall to seal the opening. In the thickness direction of the end cap, the end cap includes a cover body and a recessed portion that is recessed toward the electrode assembly, and the recessed portion is welded with the current collecting component. The cover plate is disposed above the recessed portion to cover the recessed portion.

In an example of the cylindrical battery cell of the present disclosure, the cover plate is welded with the end cap.

In an example of the cylindrical battery cell of the present disclosure, the current collecting component includes a thickened portion, and the thickened portion is welded with the recessed portion.

In an example of the cylindrical battery cell of the present disclosure, the recessed portion is disposed at the center of the end cap.

In an example of the cylindrical battery cell of the present disclosure, a liquid injection hole is disposed at the center of the recessed portion, and an opening hole corresponding to the liquid injection hole is disposed at the center of the current collecting component.

In an example of the cylindrical battery cell of the present disclosure, the diameter of the liquid injection hole is 2 mm to 7 mm.

In an example of the cylindrical battery cell of the present disclosure, an extension portion is disposed at one end of the liquid injection hole close to the electrode assembly, and the extension portion extends into the interior of the opening hole.

In an example of the cylindrical battery cell of the present disclosure, the recessed portion includes a cavity bottom wall and a cavity side wall, the cover plate includes a body portion and a connection portion disposed on the periphery of the body portion, the body portion protrudes relative to the connection portion in a direction facing away from the cavity bottom wall, and the connection portion abuts against the cavity side wall.

In an example of the cylindrical battery cell of the present disclosure, a sinking platform is disposed at one end of the recessed portion facing away from the cavity bottom wall, and the body portion is accommodated in the sinking platform.

In an example of the cylindrical battery cell of the present disclosure, at least a part of the lower surface of the end cap located at the outer periphery abuts against the end surface of the side wall for welding, and in the thickness direction of the end cap, an annular groove that is recessed toward the electrode assembly side is further disposed at the outer periphery of the end cap. A side wall of the annular groove away from the center of the end cap abuts against the inner surface of the side wall for welding.

In an example of the cylindrical battery cell of the present disclosure, a venting mark is further disposed on the end cap.

In an example of the cylindrical battery cell of the present disclosure, a second tab is disposed on one side of the electrode assembly facing the end wall, and the cylindrical battery cell further includes an electrode terminal protruding from the outer surface of the end wall, the electrode terminal is electrically connected to the second tab, and a liquid injection hole is disposed on the end wall or the electrode terminal.

The disclosure further provides a battery assembly, which includes the above-mentioned cylindrical battery cell.

The disclosure further provides an electronic device, which includes the above-mentioned battery assembly.

In the cylindrical battery cell of the disclosure, the end cap is sealed and welded with the side wall of the housing, and the end cap is welded with the current collecting component. Such configuration saves the crimp-sealing process of the housing, which not only makes it possible to reduce the risk of connection failure in welding the current collecting component during the crimp-sealing process, but also reduces the space occupied by a rolling groove on the housing, so as to improve the utilization of the internal space of the battery cell. In the meantime, in the cylindrical battery cell of the present disclosure, a recessed portion is disposed on the end cap. The recessed portion may improve the adhesion of the contact surface between the end cap and the current collecting component, so that not only the welding between the end cap and the current collecting component is stable, but also a fixed distribution region of welding marks is formed on the end cap, so it is possible to detect the welding position errors during the welding process in a timely manner. In addition, in the present disclosure, a cover plate is disposed on the end cap, and the cover plate covers the recessed portion. Such configuration may help to reduce the area of the recessed portion exposed to the air, so that oxidization of the welding region of the end cap will occur at a later time, and the corrosion of the welding mark will be alleviated, thereby reducing the probability of failure of the welding between the end cap and the current collecting component, and prolonging the service life of the cylindrical battery cell.

### BRIEF DESCRIPTION OF THE DRAWINGS

In order to explain the embodiments of the present disclosure or the technical solutions in the related art more clearly, the drawings needed to be used in the description of the embodiments or the related art will be briefly introduced below. Clearly, the drawings in the following description are only some embodiments of the present disclosure. For those of ordinary skill in the art, other drawings may be obtained based on these drawings without exerting creative efforts.
FIG. 1 is an overall three-dimensional schematic view of an embodiment of the cylindrical battery cell of the present disclosure.
FIG. 2 is a cross-sectional view of an overall structure of an embodiment of the cylindrical battery cell of the present disclosure.
FIG. 3 is a partial enlarged view of a region A in FIG. 2.
FIG. 4 is a three-dimensional schematic view of an end cover of an embodiment of the cylindrical battery cell of the present disclosure.
FIG. 5 is a schematic structural view of a liquid injection hole opened at the center of the end cap in an embodiment of the cylindrical battery cell of the present disclosure.
FIG. 6 is a cross-sectional view of an overall structure of the end cap in an embodiment of the cylindrical battery cell of the present disclosure.
FIG. 7 is a cross-sectional view of an overall structure of the cover plate in an embodiment of the cylindrical battery cell of the present disclosure.
FIG. 8 is a partial enlarged view of a configuration position between the cover plate and the end cap in an embodiment of the cylindrical battery cell of the present disclosure.
FIG. 9 is a schematic structural view of a liquid injection hole opened at the center of the end cap in an embodiment of the cylindrical battery cell of the present disclosure.
FIG. 10 is a schematic structural view of a liquid injection hole opened on the end wall side of the housing in an embodiment of the cylindrical battery cell of the present disclosure.
FIG. 11 is a schematic view of an overall structure of an embodiment of the battery assembly of the present disclosure.
FIG. 12 is a schematic structural view of the battery assembly of the present disclosure disposed on a vehicle.

### DESCRIPTION OF THE EMBODIMENTS

The following describes the implementation of the present disclosure through specific examples. Those skilled in the art can easily understand other advantages and effects of the present disclosure from the contents disclosed in this specification. The present disclosure can also be implemented or applied through other different specific implementations. Various details in this specification can also be modified or changed in various ways based on different viewpoints and applications without departing from the scope of the appended claims. It should be noted that, as long as there is no conflict between the embodiments, the following embodiments and the features in the embodiments may be combined with each other. It should also be understood that the terminology used in the embodiments of the present disclosure is for describing specific embodiments, but not for limiting the scope of the present disclosure. Test methods without specifying specific conditions in the following examples usually adopt conventional conditions or conditions recommended by various manufacturers.

When an embodiment provides a numerical range, it should be understood that, unless otherwise stated in the present disclosure, the two endpoints of each numerical range and any value between the two endpoints may be selected. Unless otherwise defined, all technical and scientific terms used in the present disclosure are consistent with the knowledge of the related art and the description of the present disclosure by those skilled in the art. They may also be used with the methods and methods described in the embodiments of the present disclosure. Equipment and materials are similar or equivalent to any methods, equipment and materials of the related art to implement the present disclosure.

It should be noted that terms such as "upper", "lower", "left", "right", "middle" and "one" cited in this specification are only for convenience of description and are not used to limit the scope of this specification. As for the implementable scope of the disclosure, changes or adjustments in the relative relationships shall also be regarded as the implementable scope of the disclosure, provided there is no substantial change in the technical content.

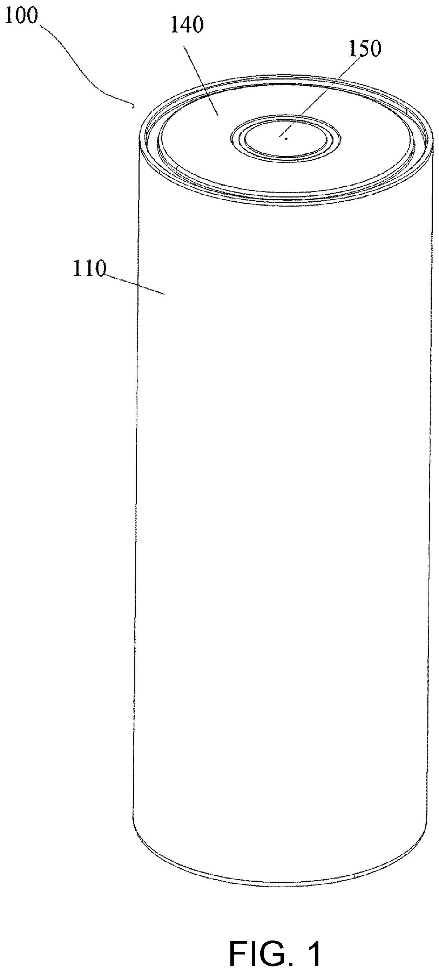

Please refer to FIG. 1 to FIG. 12. The disclosure provides a cylindrical battery cell 100, a battery assembly and an electronic device. In the cylindrical battery cell 100, by providing the recessed portion 141 on the end cap 140, the stability of the welding between the end cap 140 and the current collecting component 130 may be improved. In the meantime, a cover plate 150 is disposed on the end cover 140, so that the cover plate 150 covers the recessed portion 141 and it is possible to prevent the welding mark between the end cap 140 and the current collecting component 130 in the recessed portion 141 from being oxidized and rusted, thereby reducing the probability of failure of the welding between the end cap 140 and the current collecting component 130 as well as extending the service life of the cylindrical battery cell 100.

FIG. 1 to FIG. 3 further illustrate the structure of the cylindrical battery cell 100. The cylindrical battery cell 100 includes: a housing 110, an electrode assembly 120, a current collecting component 130, an end cap 140 and a cover plate 150. An accommodation cavity is formed in the housing 110 for accommodating the electrode assembly 120, electrolyte (not shown) and other components. The housing 110 may be open at one end or open at both ends. The specific size of the housing 110 may be determined according to the specific size of the electrode assembly 120. For example, the specific size of the housing 110 may satisfy 4680, 4695, 46120 and other specifications of a large cylindrical battery. The housing 110 may be made of a variety of materials, such as copper, iron, aluminum, steel, aluminum alloy, etc. In order to prevent the housing 110 from rusting after being used for a long time, the surface of the housing 110 may also be plated with a layer of anti-rust material, such as nickel.

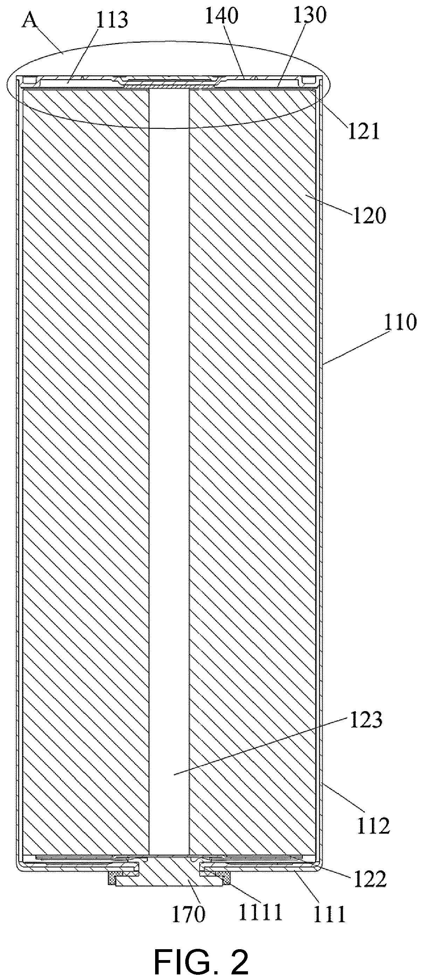

Please refer to FIG. 2, which further describes the structure of the housing 110. The housing 110 includes an end wall 111 and a side wall 112 surrounding the end wall 111. The end wall 111 is a closed end, and the opening 113 opposite to the end wall 111 is an open end. The end wall 111 and the side wall 112 may be integrally formed and connected, or they may be formed separately and then welded and connected.

As shown in FIG. 2, the electronic assembly 120 is accommodated in the housing 110. The electrode assembly 120 is a component in the battery cell where electrochemical reactions occur. The housing 110 may include one or more electrode assemblies 120. The electrode assembly 120 is mainly formed by winding or stacking positive electrode sheets and negative electrode sheets, and normally a separator is disposed between the positive electrode sheet and the negative electrode sheet. The positive electrode sheet includes a positive electrode current collecting body and a positive electrode active material layer. The positive electrode active material layer is coated on the surface of the positive electrode current collecting body. The positive electrode current collecting body includes a positive electrode coating region and a positive electrode tab connected to the positive electrode coating region. The positive electrode coating region is coated with the positive electrode active material layer, and the positive electrode tab is not coated with the positive electrode active material layer. The negative electrode sheet includes a negative electrode current collecting body and a negative electrode active material layer. The negative electrode active material layer is coated on the surface of the negative electrode current collecting body; the negative electrode current collecting body includes a negative electrode coating region and a negative electrode tab connected to the negative electrode coating region. The negative electrode coating region is coated with the negative electrode active material layer and the negative electrode tab is not coated with the negative electrode active material layer. Taking lithium-ion batteries as an example, the material of the positive electrode current collecting body may be aluminum, and the positive electrode active material layer includes a positive electrode active material. The positive electrode active material may be lithium cobalt oxide, lithium iron phosphate, ternary lithium or lithium manganate, etc. The material of the negative electrode current collecting body may be copper, and the negative electrode active material layer may include a negative electrode active material. The negative electrode active material may be carbon, silicon, or the like. The material of the separator may be PP (polypropylene) or PE (polyethylene), etc. In order to protect and insulate the battery cell, the battery cell may also be covered with an insulating film. The insulating film may be synthesized from PP, PE, PET, PVC or other polymer materials.

Please further refer to FIG. 2. In an example of the cylindrical battery cell 100 of the present disclosure, the electrode assembly 120 is sealed and disposed in the housing 110. A first tab 121 and a second tab 122 are respectively disposed at both ends in the height direction of the electrode assembly 120, and the first tab 121 and the second tab 122 have opposite polarities, wherein the first tab 121 faces the opening 113 of the housing 110 and the first tab 121 is a negative electrode tab. It should be noted that in other embodiments, the first tab 121 may also be a positive electrode tab, and the second tab 122 may be a negative electrode tab.

Please further refer to FIG. 2. In an example of the cylindrical battery cell 100 of the present disclosure, a through terminal mounting hole 1111 is opened on the end wall 111 of the housing 110. The electrode terminal 170 is disposed in the terminal mounting hole 1111 in a sealed and insulating manner. As long as the electrode terminal 170 is sealed and insulated from the end wall 111, there is no limitation to the method of disposing the electrode terminal 170 on the end wall 111. A second tab 122 is disposed on one side of the electrode assembly 120 facing the end wall 111. One end of the electrode terminal 170 may be directly welded and connected to the second tab 122, or may be conductively connected to the second tab 122 through the current collecting component 130. No further specific limitation is applied in the disclosure.

Please refer to FIG. 2 to FIG. 3. In an example of the cylindrical battery cell 100 of the present disclosure, the current collecting component 130 is disposed in the housing 110 and is located on one side of the electrode assembly 120 facing the opening 113. The current collecting component 130 is welded and connected to the first tab 121. There is no limitation to the specific position where the current collecting component 130 and the first tab 121 are welded and connected and the welding area of the two as long as the stable electrical connection between the current collecting component 130 and the first tab 121 can be achieved. The end cap 140 is disposed on one side adjacent to the opening 113 of the housing 110, and is located on one side of the current collecting component 130 away from the electrode assembly 120; the outer periphery of the end cap 140 is welded and connected to the side wall 112 of the housing 110, so that the end cap 140 is connected to the opening 113 of the housing 110 in a sealed manner. There is no limitation to form the structure of the welded and connected outer periphery of the end cap 140 and the side wall 112 of the housing 110 as long as the requirements for welding and connecting strength between the housing 110 and the end cap 140 and the sealing of the two can be met. The end cap 140 includes a cover body 144 and a recessed portion 141; in the thickness direction of the end cap 140, the recessed portion 141 is recessed toward the electrode assembly 120 side. The recessed portion 141 includes a cavity bottom wall 1411. The cavity bottom wall 1411 is welded with one side of the current collecting component 130 away from the electrode assembly 120. In an embodiment of the present disclosure, there is no specific limitation to the relative positions of the recessed portion 141 and the cover body 144. For example, the recessed portion 141 may be disposed in the central region of the cover body 144 or in the periphery region of the cover body 144 as long as the requirements for welding and connecting the recessed portion 141 and the current collecting component 130 can be met. In the meantime, there is no specific limitation to the size of area of the recessed portion 141 as long as the requirements for welding strength between the cavity bottom wall 1411 and the current collecting component 130 can be met. In the embodiment of the present disclosure, a cover plate 150 is further disposed on the end cover 140. The cover plate 150 is disposed above the recessed portion 141 and covers the recessed portion 141; there are many options for disposing the cover plate 150 on the end cover 140, such as adhesive connection or a welded connection, as long as the requirements for the connection strength of the cover plate 150 can be met. In addition, in this embodiment, there is no limitation to the shape of the cover plate 150, for example, the shape of the cover plate 150 may be any shape such as a disc shape, an annular shape, or a rectangular shape, as long as the cover plate 150 can cover the recessed portion 141.

When assembling conventional cylindrical battery cells, it is normally required to process rolling grooves on the side walls of the housing, then weld and connect the current collecting component to the rolling grooves, and finally seal and fix the end cap at the opening of the housing through the crimp-sealing process. During the crimp-sealing operation, the welding plane between the rolling groove and the current collecting component is pulled very often, causing damage to the weld and affecting the conductive performance of the cylindrical battery cell. In the meantime, the rolling groove will also occupy the space of the housing in the radial and axial directions, and the utilization of space inside the battery cell is reduced.

In an embodiment of the present disclosure, the conductive connection between the electrode assembly 120 and the housing 110 and the fixation of the end cap 140 at the opening 113 of the housing 110 are achieved by welding the outer periphery of the end cap 140 to the side wall 112 of the housing 110 and welding the recessed portion 141 of the end cap 140 to the current collecting component 130. In such configuration, mechanical sealing processes such as rolling grooves and crimp-sealing are not involved in the assembly process of the battery cell, which will not affect the conduction between the current collecting component 130 and housing 110. Therefore, not only that it is possible improve the stability of the conductive performance of the cylindrical battery cell 100, but also it is possible to improve the utilization of internal space of the cylindrical battery cell 100, thereby increasing the volumetric energy density of the battery cell. In the meantime, by disposing the recessed portion 141 on the end cap 140, the cavity bottom wall 1411 of the recessed portion 141 abuts against the current collecting component 130, so that a part of the region of the end cap 140 abuts against the surface of the current collecting component 130, thereby increasing the adhesion of the welding surface between the end cap 140 and the current collecting component 130, so that the stability of welding between the end cap 140 and the current collecting component 130 may be enhanced. In the meantime, since a fixed distribution region of welding marks is formed by the recessed portion 141 on the end cap 140, it is possible to detect the welding position errors during the welding process in a timely manner. In addition, by disposing the cover plate 150 to cover the recessed portion 141, such configuration may help to reduce the area of the recessed portion 141 exposed to the air, so that oxidization of the welding marks between the end cap 140 and the current collecting component 130 will occur at a later time, and the corrosion of the welding marks will be alleviated, thereby reducing the probability of failure of the welding between the end cap 140 and the current collecting component 130, and prolonging the service life of the cylindrical battery cell 100.

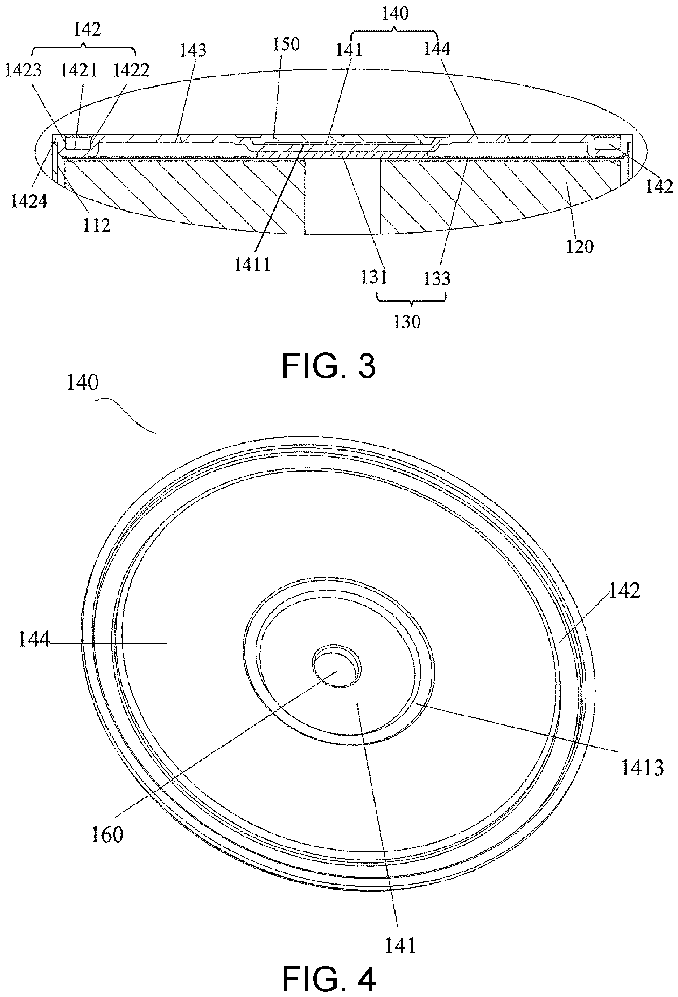

Please refer to FIG. 2 and FIG. 3. In an example of the cylindrical battery cell 100 of the present disclosure, the cover plate 150 and the end cap 140 are welded. There are many options for seam welding the cover plate 150 and the end cover 140, such as fillet welding, groove welding, etc., as long as the requirements for the welding connection strength can be met. The cover plate 150 and the end cover 140 are welded together, and the connection strength is high. When the cylindrical battery cell 100 is impacted by an external force during transportation and configuration, it is possible to reduce the probability of the cover plate 150 being displaced or falling off from the recessed portion 141, thereby ensuring the protection function of the cover plate 150 on the recessed portion 141.

Please refer to FIG. 3, which further describes the structure of the current collecting component 130. The current collecting component 130 includes a current collecting body 133 and a thickened portion 131; the current collecting body 133 is welded and connected to the first tab 121 on one side facing the electrode assembly 120. In an example of the present disclosure, one end of the thickened portion 131 in the thickness direction is conductively and fixedly connected to the current collecting body 133, there is no limitation to the structural form of the conductive and fixed connection as long as a stable mechanical connection relationship and an electrical connection relationship can be established. The other end of the thickened portion 131 in the thickness direction is welded and connected to the cavity bottom wall 1411 of the recessed portion 141. By disposing the thickened portion 131, when the recessed portion 141 and the thickened portion 131 are welded outside the housing 110 through penetration laser, the welding difficulty may be reduced, the welding process window may be increased, and the phenomenon of welding through of the current collecting component 130 may be reduced, thus enhancing the welding quality. In the meantime, it is also possible to reduce the probability that welding slag enters the electrolyte from the welding penetration position when the current collecting component 130 is welded through to cause contamination to the electrolyte. In addition, it is also possible to reduce the risk of electrolyte leakage from the welding penetration position, thereby increasing the service life of the cylindrical battery cell 100.

Specifically, the end cap 140 may be made of a variety of materials, such as copper, iron, aluminum, steel, aluminum alloy, etc. In order to facilitate the welding connection, correspondingly, the material of the current collecting component 130 welded with the end cap 140 may also be changed along with the change of the material of the end cap 140. In order to ensure the strength and conductivity performance of the end cap 140, in an example of the cylindrical battery cell 100 of the present disclosure, the end cap 140 is made of low carbon steel. Correspondingly, the material of the current collecting component 130 is also made of low carbon steel. With such configuration, welding may be easily carried out for the two with the same material and the quality of welding is better. In another embodiment, it may be that only the thickened portion 131 is made of low carbon steel, and the current collecting body 133 is made of flexible metal, such as copper. Such configuration not only facilitates the welding between the thickened portion 131 and the end cap 140 and ensures the quality of welding, but also allows the current collecting body 133 to have a certain degree of flexibility, which may reduce the influence of deformation stress on the tab welding region during the welding process of the end cap 140.

Please refer to FIG. 3 and FIG. 4. In an example of the cylindrical battery cell 100 of the present disclosure, the recessed portion 141 is disposed at the center of the end cap 140. There may be a variety of shapes of projection of the recessed portion 141 on the end cap 140, such as a disc shape, an annular shape or a rectangular shape, as long as the requirements for mechanical connection strength and current diversion between the end cap 140 and the current collecting component 130 is satisfied. By disposing the recessed portion 141 at the center of the end cap 140, during the welding process, the welding in the region of the entire recessed portion 141 may be completed by simply moving the welding head back and forth in the central region, and therefore a better welding path may be obtained, and the efficiency of welding between the end cap 140 and the current collecting component 130 may be improved.

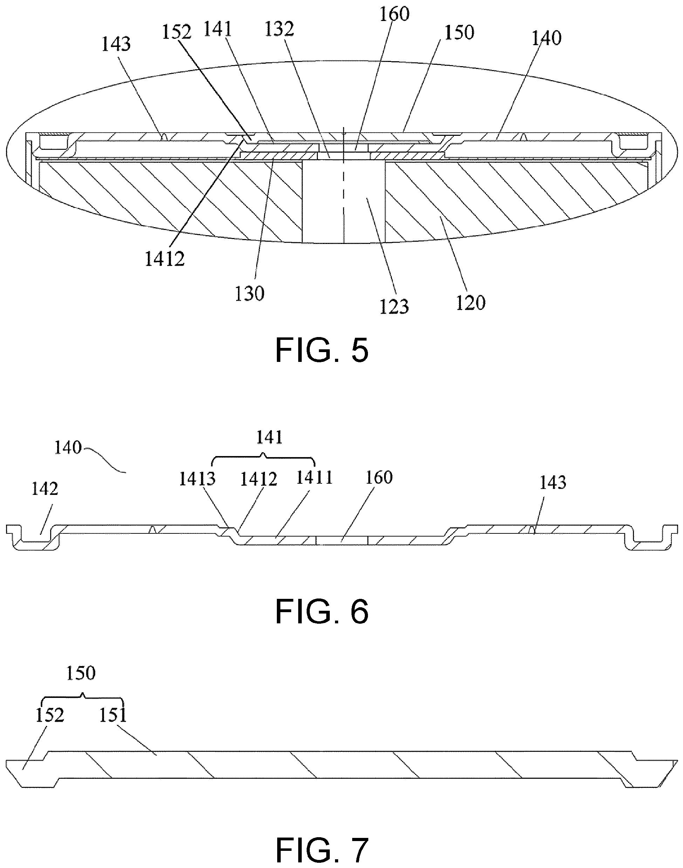

Please refer to FIG. 4 to FIG. 6. In an example of the cylindrical battery cell 100 of the present disclosure, a liquid injection hole 160 is disposed in the central region of the end cap 140, and an opening hole 132 is correspondingly disposed in the central region of the current collecting component 130. The liquid injection hole 160 and the opening hole 132 are disposed concentrically or substantially concentrically with the central hole 123 of the electrode assembly 120. Through such configuration, when liquid is injected, not only that it is possible to position the circumferential direction of the liquid injection hole 160 conveniently and accurately, but also the problem that eccentric liquid injection in the electrode assembly 120 affects the uniformity of the liquid injection may be solved. Along the axial direction of the electrode assembly 120, the projection of the liquid injection hole 160 on the end surface of the current collecting component 130 covers the opening hole 132 or falls into the opening hole 132 to achieve communication between the liquid injection hole 160 and the opening hole 132. When the electrolyte is injected from the liquid injection hole 160, the liquid may enter the central hole 123 through the opening hole 132 and infiltrate the electrode assembly 120. The liquid injection hole 160 and the opening hole 132 may be formed into a variety of shapes, for example, they may be circular, rectangular, or strip-shaped as long as the requirements for liquid injection can be met. Please refer to FIG. 5. In an embodiment of the present disclosure, the projection of the liquid injection hole 160 on the end surface of the current collecting component 130 completely falls into the opening hole 132. Such configuration prevents the electrolyte from contacting the welding region of the recessed portion 141 and the current collecting component 130 during the injection process, thereby preventing welding slag in the welding region from being flushed into the interior of the electrode assembly 120 and affecting the injection effect of the electrode assembly 120.

The diameter of the liquid injection hole 160 may be 1 mm to 14 mm. Considering the operation of the liquid injection process, the diameter of the liquid injection hole 160 is preferably smaller than the diameter of the central hole 123 of the electrode assembly 120. In an example of the cylindrical battery cell 100 of the present disclosure, the diameter of the liquid injection hole 160 may be any value from 2 mm to 7 mm, for example, the value may be 2 mm, 3 mm, 4 mm or 7 mm and so on.

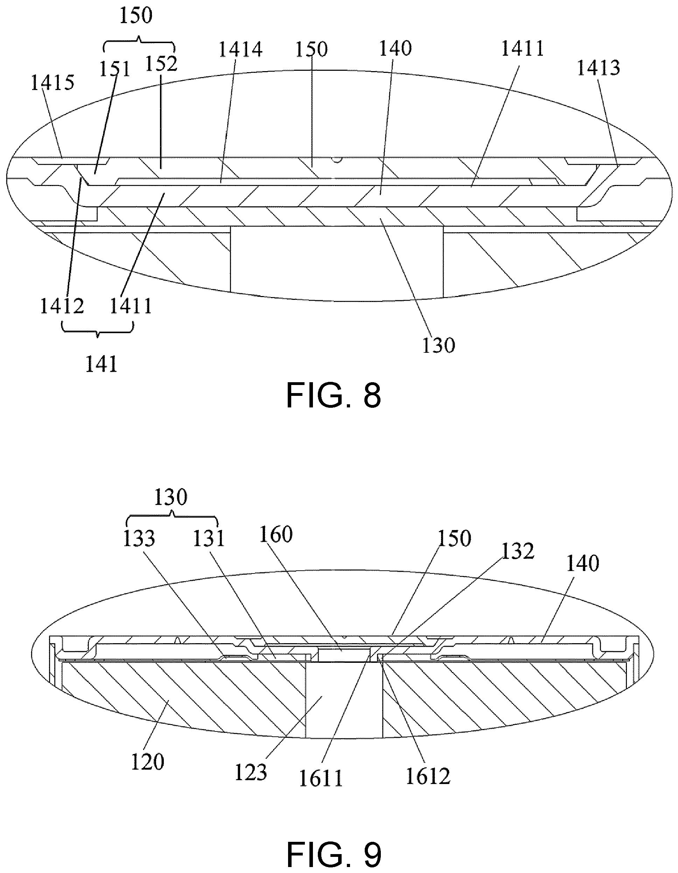

Please refer to FIG. 9. In an example of a cylindrical battery cell 100 of the present disclosure, along the height direction of the liquid injection hole 160, an extension portion 161 is disposed along the circumferential side wall of the liquid injection hole 160 at one end of the liquid injection hole 160 close to the electrode assembly 120. The extension portion 161 extends downward into the interior of the opening hole 132; the extension portion 161 includes an inner hole wall 1611 and an outer hole wall 1612 along the radial direction, and the inner hole wall 1611 is close to the center of the liquid injection hole 160. The outer hole wall 1612 may be attached to the side wall of the opening hole 132, or a gap may be present between the outer hole wall 1612 and the side wall of the opening hole 132. In the present disclosure, there is no limitation to the depth at which the extension portion 161 extends into the opening hole 132, and the depth may be larger than the height of the opening hole 132, or may be smaller than or equal to the height of the opening hole 132. By disposing the extension portion 161, the height of the side wall of the liquid injection hole 160 is increased, which facilitates the temporary sealing of the liquid injection hole 160 during the liquid injection process.

Please refer to FIG. 6 to FIG. 8, which further describe the structures of the recessed portion 141 and the cover plate 150 and their configuration and cooperation relationship. The recessed portion 141 includes a cavity bottom wall 1411 and a cavity side wall 1412 connected to the cavity bottom wall 1411; the cover plate 150 includes a body portion 151 and a connection portion 152 connected to the edge of the body portion 151. The body portion 151 and the connection portion 152 may be connected integrally, but the disclosure is not limited thereto. As shown in the figure, the body portion 151 protrudes relative to the connection portion 152 in a direction facing away from the cavity bottom wall 1411, and the connection portion 152 abuts against the cavity side wall 1412. The connection between the connection portion 152 and the cavity side wall 1412 may be established through an interference fit, or through any connection method, such as welding, that is able to meet the requirements for the connection strength. With such configuration, an avoidance cavity 1414 is formed between the body portion 151 and the cavity bottom wall 1411, so that the welding marks distributed on the cavity bottom wall 1411 may be accommodated in the avoidance cavity 1414, thus reducing interference between the welding marks and the cover plate 150 above, and preventing the flatness for disposing the cover plate 150 from being affected. It should be noted that, in another embodiment of the present disclosure, please refer to FIG. 5, when the liquid injection hole 160 is opened in the recessed portion 141, under the circumstances, it is required that the connection portion 152 of the cover plate 150 and the cavity side wall 1412 be sealed, for example, in an embodiment of the present disclosure, welding may be adopted for connecting the connection portion 152 and the cavity side wall 1412. In this way, the reliability of sealing is good, and the connection strength is high to withstand a large external impact.

Further, please refer to FIG. 8. In order to facilitate the positioning and configuration of the cover plate 150 in the recessed portion 141, in another embodiment of the present disclosure, the cavity side wall 1412 and the circumferential side wall of the connection portion 152 of the cover plate 150 may have matching shapes to facilitate guidance and configuration. Such configuration facilitates rapid and accurate positioning and configuration of the cover plate 150 on the recessed portion 141, thereby improving the configuration efficiency of the cover plate 150 on the end cap 140.

Please refer to FIG. 4 to FIG. 8. In an example of the cylindrical battery cell 100 of the present disclosure, the recessed portion 141 further includes a cavity sinking platform 1413 connected to the cavity side wall 1412. The cavity sinking platform 1413 is located at one end of the cavity side wall 1412 away from the cavity bottom wall 1411. The cavity sinking platform 1413 is lower than the upper surface of the end cap 140, so that after the cover plate 150 is disposed into the recessed portion 141, the upper surface of the body portion 151 of the cover plate 150 is no higher than the upper surface of the end cap 140. With such configuration, an avoidance groove 1415 is formed between the cavity sinking platform 1413 and the upper surface of the cover plate 150. When the connection portion 152 of the cover plate 150 is welded with the cavity side wall 1412, the molten weld pool adheres to the avoidance groove 1415. On the one hand, the flow of the molten weld pool may be set at a fixed range, thereby improving the quality of welding between the connection portion 152 and the cavity side wall 1412; on the other hand, it is also possible to prevent the welding mark from protruding from the upper surface of the end cap 140, resulting in a reduction in the utilization rate of the space on the upper surface of the end cap 140. In addition, the depth of the cavity sinking platform 1413 may be adjusted so that the upper surface of the body portion 151 of the cover plate 150 is further lower than the upper surface of the end cap 140, so as to further reduce the influence on the utilization rate of the space on the upper surface of the end cap 140.

Please refer to FIG. 3 and FIG. 6. In an example of the cylindrical battery cell 100 of the present disclosure, a cover body 144 includes an annular groove 142. The annular groove 142 is disposed on the outer periphery of the end cap 140, and the annular groove 142 is recessed toward the electrode assembly 120 side in the thickness direction of the end cap 140. The annular groove 142 and the cover body 144 are formed integrally through stamping. As shown in the figure, the annular groove 142 includes an annular bottom wall 1421, as well as first annular side walls 1422 and second annular side walls 1423 located around both sides of the annular bottom wall 1421. A position-limiting portion 1424 is disposed at one end of the second annular side wall 1423 away from the annular bottom wall 1421, wherein the second annular side wall 1423 is away from the center of the end cap 140, and the position-limiting portion 1424 extends toward one side away from the center of the end cap 140. The position-limiting portion 1424 may be an integral annular structure connected to the outer peripheral surface of the second annular side wall 1423, or may be a plurality of block-like structures disposed at intervals on the outer peripheral surface of the second annular side wall 1423; there is no limitation to the method of connecting the position-limiting portion 1424 and the second annular side wall 1423, and the connection may be carried out through bolts, integral connection, welding connection, etc. One end surface of the position-limiting portion 1424 facing the annular bottom wall 1421 abuts against the end surface of the side wall 112 of the housing 110 for welding, and the outer surface of the second annular side wall 1423 abuts against the inner surface of the side wall 112 of the housing 110 for welding. The configuration of the position-limiting portion 1424 and the second annular side wall 1423 makes it possible to, on the one hand, improve the configuration accuracy of the end cap 140 in the axial and radial directions of the housing 110, and improve the consistency of product assembly accuracy. On the other hand, when laser welding is performed on the outside of the housing 110 where the position-limiting portion 1424 abuts against the end surface of the side wall 112 of the housing 110 in the radial direction, the molten weld pool will adhere to the position-limiting portion 1424 and the second annular side wall 1423 simultaneously, thereby increasing the welding connection area between end cap 140 and the housing 110, and thus improving the welding connection strength and sealing performance. Meanwhile, because the molten weld pool is attached to the second annular side wall 1423, it is possible to prevent the welding slag generated when the housing 110 is welded through from falling into the interior of the housing 110 and affecting the working performance of the battery cell.

Please refer to FIG. 3 and FIG. 6. In an example of the cylindrical battery cell 100 of the present disclosure, a venting mark 143 is processed on the cover body 144 of the end cap 140. The venting mark 143 may be a continuous annular structure or a discontinuous structure. The venting mark 143 is located in a fragile region of the end cap 140. When the air pressure inside the cylindrical battery cell 100 exceeds a certain threshold, the position where the venting mark 143 is located will be ruptured, and the air pressure inside the cylindrical battery cell 100 will be discharged from the rupture, thereby preventing heat from spreading laterally in cylindrical batteries to cause more dramatic consequences.

Please refer to FIG. 3 and FIG. 6. The venting mark 143 is located on one side of the end cap 140 facing the electrode assembly 120. The venting mark 143 is perpendicular to the surface of the end cap 140 in the depth direction. The cross-section of the venting mark 143 may be inverted, and one end with a large diameter faces the electrode assembly 120 side. Since the nickel plating layer on the surface of end cap 140 will be spoiled by the venting mark 143, the position where the venting mark 143 is located is very likely to be corroded, which affects the opening pressure of the venting mark 143. By disposing the venting mark 143 on one side facing the electrode assembly 120, the venting mark 143 is located in the sealed space of the housing 110, so that the venting mark 143 has less contact with the air and the degree of corrosion of the venting mark 143 may be reduced, thereby increasing the service life of the venting mark 143.

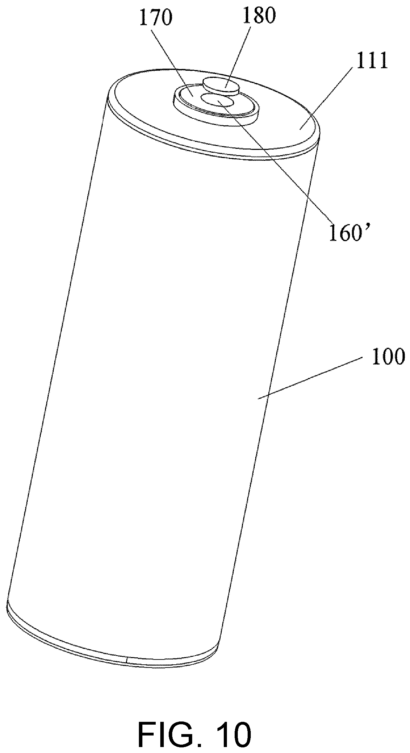

It should be noted that the liquid injection hole in the above embodiment may not be disposed on the end cap 140, but may be disposed on the end wall 111 side of the housing 110, which also serves the function of injecting liquid into the interior of the electrode assembly 120. Please refer to FIG. 10. In an embodiment of the present disclosure, a liquid injection hole 160' is disposed on the electrode terminal 170, and the electrolyte enters the interior of the electrode assembly 120 through the liquid injection hole 160'. A blocking plate 180 is also disposed on the electrode terminal 170. The blocking plate 180 seals the liquid injection hole 160' to prevent the electrolyte from overflowing from the liquid injection hole 160'. The liquid injection hole 160' is disposed on the electrode terminal 170. On the one hand, the liquid injection hole 160' and the end cap 140 are respectively located at both ends of the housing 110. Therefore, the welding slag generated when the end cap 140 is welded with the current collecting component 130 will not enter the interior of the battery cell from the liquid injection hole 160' and contaminate the electrolyte, thereby improving the working life of the cylindrical battery cell 100. On the other hand, when the blocking plate 180 seals the liquid injection hole 160' by welding, the welding region is far away from the second tab 122, so the second tab 122 is less affected by thermal impact in the welding process. In the meantime, during welding, since the electrode terminal 170 itself has a certain thickness, the electrode terminal 170 is able to alleviate transfer of the heat energy generating from welding into the interior of the battery cell, thereby reducing the probability of thermal decomposition of the electrolyte. In another embodiment, the liquid injection hole may also be opened on the end wall 111 of the housing 110, which may also prevent the welding slag generated when the end cap 140 and the current collecting component 130 are welded from entering the interior of the battery cell from the liquid injection hole and contaminating the electrolyte. It should be noted that in an embodiment of the present disclosure, the electrode terminal 170 is positively charged and serves as a positive electrode terminal of the cylindrical battery cell 100, and the housing 110 is negatively charged as a whole and serves as a negative electrode terminal of the cylindrical battery cell 100. In other embodiments, it may also be that the electrode terminal 170 is negatively charged and serves as a negative electrode terminal of the cylindrical battery cell 100, and the housing 110 is positively charged as a whole and serves as a positive electrode terminal of the cylindrical battery cell 100.

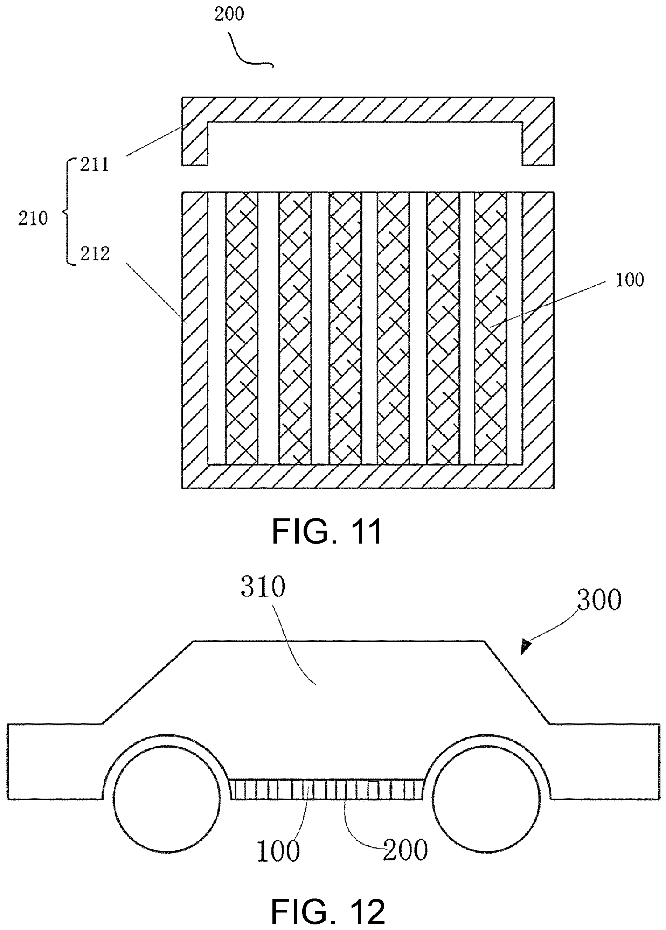

Please refer to FIG. 11. In an embodiment of the battery assembly 200 of the present disclosure, the battery assembly 200 includes a box body 210 and at least one cylindrical battery cell 100; the box body 210 includes a first box body portion 211 and a second box body portion 212. The first box body portion 211 and the second box body portion 212 cover each other to form an accommodation space. Multiple cylindrical battery cells 100 are accommodated in the accommodation space. The multiple cylindrical battery cells 100 may be connected in series and/or in parallel. The battery assembly 200 may be, for example, a battery module, a battery pack, or the like.

Please refer to FIG. 12. In an example of the electronic device 300 of the present disclosure, the electronic device 300 includes a working portion 310 and a battery assembly 200. The working portion 310 is electrically connected to the battery assembly 200 to obtain electrical energy for support. The working portion 310 may be a unit component that is able to obtain the electric energy of the battery assembly 200 and perform corresponding work, such as a blade rotating unit of a fan, a dust collection working unit of a vacuum cleaner, a wheel driving unit in an electric vehicle, etc. The electrical device 300 may be vehicles, cell phones, portable devices, laptops, ships, spacecraft, electric toys and power tools, etc. Vehicles may be fuel vehicles, gas vehicles or new energy vehicles, and new energy vehicles may be pure electric vehicles, hybrid vehicles or extended-range vehicles, etc.; spacecraft include aircraft, rockets, space shuttles, spaceships, etc.; electric toys include fixed type or mobile electric toys, such as game consoles, electric toy cars, electric toy ships and electric toy airplanes, etc.; electric tools include metal cutting electric tools, grinding electric tools, assembly electric tools and railway electric tools, for example, electric drills, electric grinders, electric wrenches, electric screwdrivers, electric hammers, impact drills, concrete vibrators, planers and more. The embodiments of this disclosure impose no special limitation to the above-mentioned electrical device 300. In an embodiment of the electronic device 300 of the present disclosure, the electronic device 300 is a vehicle, the working portion 310 is the vehicle body, and the battery assembly 200 is fixedly disposed on the vehicle body to provide driving force for the vehicle and realize the operation of the vehicle.

In the cylindrical battery cell of the disclosure, by disposing the recessed portion on the end cap, the cavity bottom wall of the recessed portion abuts against with the current collecting component, so that a part of the region of the end cap abuts against the surface of the current collecting component, thereby increasing the adhesion of the contact surface between the end cap and the current collecting component, so that the stability of welding between the end cap and the current collecting component may be enhanced. In the meantime, since a fixed distribution region of welding marks is formed by the recessed portion on the end cap, it is possible to detect the welding position errors during the welding process in a timely manner. In addition, by disposing the cover plate to cover the recessed portion, such configuration may help to reduce the area of the recessed portion exposed to the air, so that oxidization in the welding region of the end cap and the corrosion of the welding marks will occur at a later time, thereby reducing the probability of connection failure of the welding between the end cap and the current collecting component, and prolonging the service life of the cylindrical battery cell. In this way, the present disclosure effectively overcomes some practical problems in the related art and has high value of utilization and great significance of use. The above embodiments are only illustrative of the principles and effects of the present disclosure, but are not intended to limit the present disclosure. Anyone familiar with this technology can modify or change the above embodiments without departing from the scope of the appended claims. Therefore,the invention is defined by the scope of the appended claims.

### List of Reference Numerals

100: cylindrical battery cell,
110: housing,
111: end wall,
1111: terminal mounting hole,
112: side wall,
113: opening,
120: electrode assembly,
121: first tab,
122: second tab,
123: central hole,
130: current collecting component,
131: thickened portion,
132: opening hole,
133: current collecting body,
140: end cap,
141: recessed portion,
1411: cavity bottom wall,
1412: cavity side wall,
1413: cavity sinking platform,
1414: avoidance cavity,
1415: avoidance groove,
142: annular groove,
1421: annular bottom wall,
1422: first annular side wall,
1423: second annular side wall,
1424: position-limiting portion,
143: venting mark,
144: cover body,
150: cover plate,
151: body portion,
152: connection portion,
160/160': liquid injection hole,
161: extension portion,
1611: inner hole wall,
1612: outer hole wall,
170: electrode terminal,
180: blocking plate,
200: battery assembly,
210: box body,
211: first box body portion,
212: second box body portion,
300: electronic device,
310: working portion.

## Claims

1. A cylindrical battery cell (100) comprising:
a housing (110) comprising an end wall (111) and a side wall (112) surrounding the end wall (111), wherein an opening (113) is formed on one side of the side wall (112) facing away from the end wall (111);
an electrode assembly (120) disposed in the housing (110), wherein a first tab (121) is disposed on one side of the electrode assembly (120) facing the opening (113);
a current collecting component (130) disposed on one side of the electrode assembly (120) facing the opening (113), wherein the current collecting component (130) is welded with the first tab (121);
an end cap (140) disposed on one side adjacent to the opening (113), and welded with the side wall (112) to seal the opening (113); wherein in a thickness direction of the end cap (140), the end cap (140) comprises a cover body (144) and a recessed portion (141) that is recessed toward the electrode assembly (120), and the recessed portion (141) is welded with the current collecting component (130); and
a cover plate (150) disposed above the recessed portion (141) to cover the recessed portion (141);
wherein the cylindrical battery cell (100) is **characterized in that**
a venting mark (143) is further disposed on the end cap (140).

2. The cylindrical battery cell (100) according to claim 1, wherein the cover plate (150) is welded with the end cap (140).

3. The cylindrical battery cell (100) according to claim 1, wherein the current collecting component (130) comprises a thickened portion (131), and the thickened portion (131) is welded with the recessed portion (141).

4. The cylindrical battery cell (100) according to claim 1, wherein the recessed portion (141) is disposed at a center of the end cap (140).

5. The cylindrical battery cell (100) according to claim 4, wherein a liquid injection hole (160) is disposed at a center of the recessed portion (141), and an opening hole (132) corresponding to the liquid injection hole (160) is disposed at a center of the current collecting component (130).

6. The cylindrical battery cell (100) according to claim 5, wherein a diameter of the liquid injection hole (160, 160') is 2 mm to 7 mm.

7. The cylindrical battery cell (100) according to claim 5, wherein an extension portion (161) is disposed at one end of the liquid injection hole (160) close to the electrode assembly (120), and the extension portion (161) extends into an interior of the opening hole (132).

8. The cylindrical battery cell (100) according to claim 1, wherein the recessed portion (141) comprises a cavity bottom wall (1411) and a cavity side wall (1412) connected to the cavity bottom wall (1411), the cover plate (150) comprises a body portion (151) and a connection portion (152) disposed on a periphery of the body portion (151), the body portion (151) protrudes relative to the connection portion (152) in a direction facing away from the cavity bottom wall (1411), and the connection portion (152) abuts against the cavity side wall (1412).

9. The cylindrical battery cell (100) according to claim 8, wherein the recessed portion (141) further comprises a cavity sinking platform (1413) connected to the cavity side wall (1412), and the cavity sinking platform (1413) is lower than an upper surface of the end cap (140), so that an upper surface of the body part of the cover plate (150) is not higher than the upper surface of the end cap (140).

10. The cylindrical battery cell (100) according to claim 1, wherein at least a part of a lower surface of the end cap (140) located at an outer periphery abuts against an end surface of the side wall (112) for welding, and in the thickness direction of the end cap (140), an annular groove (142) that is recessed toward one side adjacent to the electrode assembly (120) is further disposed at the outer periphery of the end cap (140), a side wall (112) of the annular groove (142) away from a center of the end cap (140) abuts against an inner surface of the side wall (112) for welding.

11. The cylindrical battery cell (100) according to claim 1, wherein a second tab (122) is disposed on one side of the electrode assembly (120) facing the end wall (111), and the cylindrical battery cell (100) further comprises an electrode terminal (170) configured protruding from an outer surface of the end wall (111), the electrode terminal (170) is electrically connected to the second tab (122), and a liquid injection hole (160') is disposed on the end wall (111) or the electrode terminal (170).

12. A battery assembly (200) comprising the cylindrical battery cell (100) according to any one of claims 1-11.

13. An electronic device (300) comprising the battery assembly (200) according to claim 12.

## Patentansprüche

1. Zylindrische Batteriezelle (100), umfassend:
ein Gehäuse (110), umfassend eine Stirnwand (111) und eine die Stirnwand (111) umgebende Seitenwand (112), wobei an einer von der Stirnwand (111) abgewandten Seite der Seitenwand (112) eine Öffnung (113) ausgebildet ist;
eine Elektrodenanordnung (120), die in dem Gehäuse (110) angeordnet ist, wobei eine erste Anschlussfahne (121) auf einer Seite der Elektrodenanordnung (120) angeordnet ist, die der Öffnung (113) zugewandt ist;
eine Stromsammelkomponente (130), die auf einer Seite der Elektrodenanordnung (120) angeordnet ist, die der Öffnung (113) zugewandt ist, wobei die Stromsammelkomponente (130) mit der ersten Anschlussfahne (121) verschweißt ist;
eine Endkappe (140), die auf einer Seite angrenzend an die Öffnung (113) angeordnet ist und mit der Seitenwand (112) verschweißt ist, um die Öffnung (113) abzudichten; wobei in einer Dickenrichtung der Endkappe (140) die Endkappe (140) einen Abdeckkörper (144) und einen ausgesparten Abschnitt (141) umfasst, der in Richtung der Elektrodenanordnung (120) ausgespart ist, und der ausgesparte Abschnitt (141) mit der Stromsammelkomponente (130) verschweißt ist; und
eine Abdeckplatte (150), die über dem ausgesparten Abschnitt (141) so angeordnet ist, dass sie den ausgesparten Abschnitt (141) abdeckt;
wobei die zylindrische Batteriezelle (100)
**dadurch gekennzeichnet ist, dass**
eine Entlüftungsmarkierung (143) zusätzlich an der Endkappe (140) angeordnet ist.

2. Zylindrische Batteriezelle (100) nach Anspruch 1, wobei die Abdeckplatte (150) mit der Endkappe (140) verschweißt ist.

3. Zylindrische Batteriezelle (100) nach Anspruch 1, wobei die Stromsammelkomponente (130) einen verdickten Abschnitt (131) umfasst und der verdickte Abschnitt (131) mit dem ausgesparten Abschnitt (141) verschweißt ist.

4. Zylindrische Batteriezelle (100) nach Anspruch 1, wobei der ausgesparte Abschnitt (141) in einer Mitte der Endkappe (140) angeordnet ist.

5. Zylindrische Batteriezelle (100) nach Anspruch 4, wobei eine Flüssigkeitseinspritzöffnung (160) in einer Mitte des ausgesparten Abschnitts (141) angeordnet ist und ein der Flüssigkeitseinspritzöffnung (160) entsprechendes Öffnungsloch (132) in einer Mitte der Stromsammelkomponente (130) angeordnet ist.

6. Zylindrische Batteriezelle (100) nach Anspruch 5, wobei ein Durchmesser der Flüssigkeitseinspritzöffnung (160, 160') 2 mm bis 7 mm beträgt.

7. Zylindrische Batteriezelle (100) nach Anspruch 5, wobei ein Verlängerungsabschnitt (161) an einem Ende der Flüssigkeitseinspritzöffnung (160) in der Nähe der Elektrodenanordnung (120) angeordnet ist und sich der Verlängerungsabschnitt (161) in das Innere des Öffnungslochs (132) erstreckt.

8. Zylindrische Batteriezelle (100) nach Anspruch 1, wobei der ausgesparte Abschnitt (141) eine Hohlraum-Bodenwand (1411) und eine mit der Hohlraum-Bodenwand (1411) verbundene Hohlraum-Seitenwand (1412) umfasst, die Abdeckplatte (150) einen Körperabschnitt (151) und einen Verbindungsabschnitt (152) umfasst, angeordnet an einem Umfang des Körperabschnitts (151), wobei der Körperabschnitt (151) relativ zu dem Verbindungsabschnitt (152) in einer von der Hohlraum-Bodenwand (1411) wegweisenden Richtung vorsteht und der Verbindungsabschnitt (152) an der Hohlraum-Seitenwand (1412) anliegt.

9. Zylindrische Batteriezelle (100) nach Anspruch 8, wobei der ausgesparte Abschnitt (141) ferner einen mit der Hohlraum-Seitenwand (1412) verbundenen Hohlraum-Absenkabsatz (1413) umfasst und der Hohlraum-Absenkabsatz (1413) niedriger als eine Oberseite der Endkappe (140) ist, so dass eine Oberseite des Körperabschnitts der Abdeckplatte (150) nicht höher als die Oberseite der Endkappe (140) ist.

10. Zylindrische Batteriezelle (100) nach Anspruch 1, wobei mindestens ein Teil einer Unterseite der Endkappe (140), die sich an einem Außenumfang befindet, an einer Endfläche der Seitenwand (112) zum Schweißen anliegt, und in der Dickenrichtung der Endkappe (140) eine ringförmige Nut (142), die zu einer Seite hin, die angrenzend an der Elektrodenanordnung (120) liegt, ausgespart ist, ferner an dem Außenumfang der Endkappe (140) angeordnet ist, wobei eine Seitenwand (112) der ringförmigen Nut (142), die von einer Mitte der Endkappe (140) entfernt ist, an einer Innenfläche der Seitenwand (112) zum Verschweißen anliegt.

11. Zylindrische Batteriezelle (100) nach Anspruch 1, wobei eine zweite Anschlussfahne (122) auf einer Seite der Elektrodenanordnung (120), die der Stirnwand (111) zugewandt ist, angeordnet ist und die zylindrische Batteriezelle (100) ferner einen Elektrodenanschluss (170) umfasst, der so konfiguriert ist, dass er aus einer Außenfläche der Stirnwand (111) vorsteht, wobei der Elektrodenanschluss (170) elektrisch mit der zweiten Anschlussfahne (122) verbunden ist und eine Flüssigkeitseinspritzöffnung (160') an der Stirnwand (111) oder dem Elektrodenanschluss (170) angeordnet ist.

12. Batterieanordnung (200), umfassend die zylindrische Batteriezelle (100) nach einem der Ansprüche 1 bis 11.

13. Elektronische Vorrichtung (300), umfassend die Batterieanordnung (200) nach Anspruch 12.

## Revendications

1. Cellule de batterie cylindrique (100) comprenant:
un boîtier (110) comprenant une paroi d'extrémité (111) et une paroi latérale (112) entourant la paroi d'extrémité (111), dans lequel une ouverture (113) est formée sur un côté de la paroi latérale (112) opposé à la paroi d'extrémité (111);
un ensemble d'électrodes (120) disposé dans le boîtier (110), dans lequel une première languette (121) est disposée sur un côté de l'ensemble d'électrodes (120) faisant face à l'ouverture (113);
un composant collecteur de courant (130) disposé sur un côté de l'ensemble d'électrodes (120) faisant face à l'ouverture (113), dans lequel le composant collecteur de courant (130) est soudé à la première languette (121);
un capuchon d'extrémité (140) disposé sur un côté adjacent à l'ouverture (113) et soudé à la paroi latérale (112) pour sceller l'ouverture (113); dans lequel, dans le sens de l'épaisseur du capuchon d'extrémité (140), le capuchon d'extrémité (140) comprend un corps de couvercle (144) et une partie en retrait (141) qui est en retrait vers l'ensemble d'électrodes (120), et la partie en retrait (141) est soudée au composant collecteur de courant (130); et une plaque de recouvrement (150) disposée au-dessus de la partie en retrait (141) pour recouvrir la partie en retrait (141) ; dans laquelle la cellule de batterie cylindrique (100) est **caractérisée en ce qu'**une marque de ventilation (143) est en outre disposée sur le capuchon d'extrémité (140).

2. La cellule de batterie cylindrique (100) selon la revendication 1, dans laquelle la plaque de recouvrement (150) est soudée au capuchon d'extrémité (140).

3. La cellule de batterie cylindrique (100) selon la revendication 1, dans laquelle le composant collecteur de courant (130) comprend une partie épaissie (131), et la partie épaissie (131) est soudée à la partie en retrait (141).

4. La cellule de batterie cylindrique (100) selon la revendication 1, dans laquelle la partie en retrait (141) est disposée au centre du capuchon d'extrémité (140).

5. La cellule de batterie cylindrique (100) selon la revendication 4, dans laquelle un trou d'injection de liquide (160) est disposé au centre de la partie en retrait (141), et
un trou d'ouverture (132) correspondant au trou d'injection de liquide (160) est disposé au centre du composant collecteur de courant (130).

6. La cellule de batterie cylindrique (100) selon la revendication 5, dans laquelle le diamètre du trou d'injection de liquide (160, 160') est compris entre 2 mm et 7 mm.

7. La cellule de batterie cylindrique (100) selon la revendication 5, dans laquelle une partie d'extension (161) est disposée à une extrémité du trou d'injection de liquide (160) à proximité de l'ensemble d'électrodes (120), et la partie d'extension (161) s'étend à l'intérieur du trou d'ouverture (132).

8. La cellule de batterie cylindrique (100) selon la revendication 1, dans laquelle la partie en retrait (141) comprend une paroi inférieure de cavité (1411) et une paroi latérale de cavité (1412) reliée à la paroi inférieure de cavité (1411), la plaque de couverture (150) comprend une partie de corps (151) et une partie de connexion (152) disposée sur une périphérie de la partie de corps (151), la partie de corps (151) fait saillie par rapport à la partie de connexion (152) dans une direction opposée à la paroi de fond de cavité (1411), et la partie de connexion (152) vient en butée contre la paroi latérale de cavité (1412).

9. La cellule de batterie cylindrique (100) selon la revendication 8, dans laquelle la partie en retrait (141) comprend en outre une plate-forme d'enfoncement de cavité (1413) reliée à la paroi latérale de la cavité (1412), et la plate-forme d'enfoncement de cavité (1413) est plus basse que la surface supérieure du capuchon d'extrémité (140), de sorte que la surface supérieure de la partie de corps de la plaque de recouvrement (150) n'est pas plus haute que la surface supérieure du capuchon d'extrémité (140).

10. La cellule de batterie cylindrique (100) selon la revendication 1, dans laquelle au moins une partie d'une surface inférieure du capuchon d'extrémité (140) située à une périphérie extérieure vient en butée contre une surface d'extrémité de la paroi latérale (112) pour le soudage, et dans la direction de l'épaisseur du capuchon d'extrémité (140), une rainure annulaire (142) qui est évidée vers un côté adjacent à l'ensemble d'électrodes (120) est en outre disposée à la périphérie extérieure du capuchon d'extrémité (140), une paroi latérale (112) de la rainure annulaire (142) éloignée du centre du capuchon d'extrémité (140) vient en butée contre une surface intérieure de la paroi latérale (112) pour le soudage.

11. La cellule de batterie cylindrique (100) selon la revendication 1, dans laquelle une deuxième languette (122) est disposée sur un côté de l'ensemble d'électrodes (120) faisant face à la paroi d'extrémité (111), et la cellule de batterie cylindrique (100) comprend en outre une borne d'électrode (170) configurée de manière à faire saillie à partir d'une surface extérieure de la paroi d'extrémité (111), la borne d'électrode (170) étant connectée électriquement à la deuxième languette (122), et un trou d'injection de liquide (160') étant disposé sur la paroi d'extrémité (111) ou la borne d'électrode (170).

12. Ensemble de batterie (200) comprenant la cellule de batterie cylindrique (100) selon l'une quelconque des revendications 1 à 11.

13. Dispositif électronique (300) comprenant l'ensemble de batterie (200) selon la revendication 12.
